# EUROPEAN PATENT SPECIFICATION

(11) **EP 1 396 691 B1**
(45) Date of publication and mention of the grant of the patent: **17.10.2007**
(21) Application number: 03019084.7
(22) Date of filing: 22.08.2003
(51) Int. Cl.: F25B 41/06, G05D 16/20

(54) **Proportional valve**
Proportionalventil
Soupape proportionnelle

(30) Priority: 05.09.2002 JP 2002259474
(43) Date of publication of application: 10.03.2004
(73) Proprietor: TGK CO., Ltd., Hachioji-shi, Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(56) References cited:
- EP-A- 0 769 645
- US-A1- 2001 032 947
- PATENT ABSTRACTS OF JAPAN vol. 2002, no. 03, 3 April 2002 (2002-04-03) & JP 2001 317652 A (TIME ENGINEERING CO LTD), 16 November 2001 (2001-11-16)

## Description

The present invention relates to a proportional valve according to the preamble part of claim 1.

In the refrigerating cycle of an automotive air conditioning system, condensed or cooled refrigerant is turned into lower-temperature, low-pressure refrigerant by a pressure reducing device, designed as a solenoid-controlled proportional valve, the valve lift of which varies in proportion to a value of a current supplied to a solenoid (JP-2002130870, Fig. 1). In the know proportional valve the valve element moves together with a piston which has a cross-sectional area equal to the valve hole of the vale seat. A piston end face is actuated by pressure on an upstream side of the valve element such that pressure acting upon the valve element an the piston are equal and opposite in direction and should be canceled out. The valve element moves only depending on the force exerted by the solenoid. A sliding portion of the piston in the vale section is hydraulically sealed, by a labyrinth seal. A labyrinth seal has advantageously low sliding resistance. For mechanical reasons, however the pressure receiving area of the vale section varies during the lifting movement of the valve element, while the pressure receiving area of the piston remains unchanged. The intended pressure cancellation then fails to function properly. The valve element then may move by itself to open or close due to an occurring difference between the pressure receiving areas. Furthermore, the labyrinth seal provided between the upstream and downstream sides of the vale section is unable to provide a perfect seal, but operates with unavoidable leakage, e.g. even when the valve section is fully closed. Leakage, however, may deteriorate the controllability.

In a pilot operated proportional control valve as known from EP 0 769 645 A the piston and the valve element both are loaded by the inlet fluid pressure in valve opening direction. A moveable core of the solenoid actuates a pilot valve provided between the moveable core and an end of the hollow piston. The pilot valve controls communication between a pressure chamber at a valve closing side of a diaphragm and an outlet port. The diaphragm outer edge is fixed in the body, while the valve element is secured in the centre of the diaphragm. The diaphragm has a bleed hole between the inlet port and the pressure chamber. The valve element is held in the closed position by the pressure in the pressure chamber and by a valve closing spring. As soon as the moveable core of the solenoid opens the pilot valve the pressure in the pressure chamber will be relieved such that the inlet pressure would fully lift the valve element into the open main valve position. The pressure receiving surface of the diaphragm remains constant over the entire lift amount of the valve element.

It is an object of the invention to provide a proportional valve of this kind which neither opens nor closes by itself nor operates with internal leakage.

The object is achieved by the features of claim 1.

The pressure receiving area of the diaphragm arranged at the pressure receiving portion of the piston varies similarly as the pressure receiving area of the valve element is varying depending on the lift amount. Accordingly, the pressure receiving areas of the valve element and the piston always are equal, regardless of the lift amount of the valve element. This effect prevents that, the valve section opens or closes by itself. The sliding portion of the piston is hydraulically sealed by the diaphragm perfectly preventing any internal leakage. The valve section truly responds to the solenoid force and the external signal only, and the controllability is improved.

Embodiments of the invention will be described with reference to the drawings. In the drawings is:
- Fig. 1: a section showing a de-energized state of a first embodiment of a proportional valve, as used as a pressure reducing device of an automotive air conditioning system,
- Fig. 2: an enlarged section of a principal part of Fig. 1,
- Fig. 3: a diagram illustrating the variation of a pressure receiving area of a diaphragm,
- Fig. 4: a section showing an energized state of the proportional valve,
- Fig. 5: a section showing a de-energized state of a second embodiment of a proportional valve,
- FIG. 6: a section showing an energized state of the proportional valve of Fig. 5, and
- Fig. 7: a section showing a de-energized state of a third embodiment of a proportional valve.

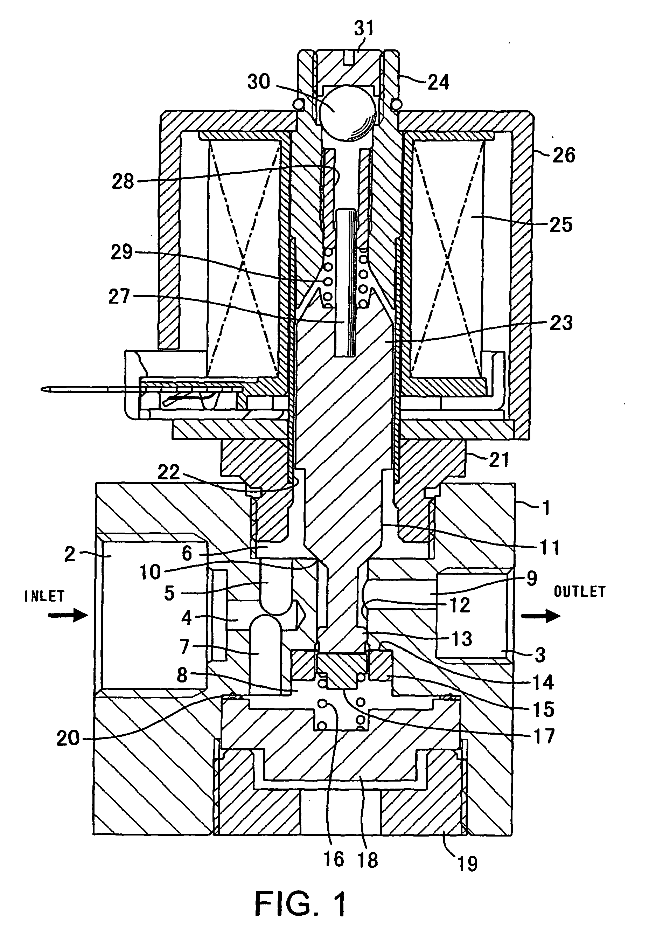

The proportional valve of Figs 1 to 4 has an inlet port 2 receiving high-pressure refrigerant and an outlet port 3 in side faces of a body 1. The inlet port 2 leads via passages 4, 5 to a first chamber 6, and via a passage 7 to a second chamber 8. The first chamber 6 communicates with the outlet port 3 through a valve hole and a passage 9 in the body 1. A peripheral edge of the valve hole opening to the first chamber 6 constitutes a valve seat 10. An axially movable valve element 11 faces the valve seat 10 from an upstream side. The valve element 11 is integral with a piston 13, thus constituting a one-piece body. The piston 13 is slidably received in a cylinder 12 of the body 1 prolonging the valve hole. A lower end of the cylinder 12 is closed by a diaphragm 14. The outer peripheral edge portion of the diaphragm 14 is secured by an annular holder 15 press-fitted in the body 1. The diaphragm 14 has an upper surface in contact with a lower end face of the piston 13. A lower surface of the diaphragm is in contact with a stopper 17 urged by a spring 16. The second chamber 8 is defined in a plug 18 pressed by a stopper 19 screwed into the body 1 via a gasket 20.

A solenoid is attached by a flange 21 to an upper part of the valve section containing body 1. A solenoid sleeve 22 has a lower end portion fitted into the flange 21. An axially movable plunger 23 in the sleeve 22 is integral with the valve element 11 and the piston 13. A cylindrical core 24 is fitted into an upper end portion of the sleeve 22. An electromagnetic coil 25 surrounds the sleeve 22, and a yoke 26 surrounds the coil 25. A coaxial shaft 27 has a lower end portion securely fitted into the plunger 23. An upper shaft end portion is supported by a hollow adjusting screw 28 screwed into the cavity of the core 24. Since the piston 13 at the lower end of the plunger 23 is supported by the cylinder 12, the valve lift characteristic relative to the value of electric current supplied to the electromagnetic coil 25 does not develop a hysteresis attributable to the resistance of the sliding motion of the plunger 23 along the inner wall of the sleeve 22 when the valve element 11 opens or closes. A spring 29 between the adjusting screw 28 and the plunger 23 has a larger spring force than the spring 16 urging the plunger 23 and the valve element 11 in valve closing direction. The urging force of the spring 29 is adjusted by varying the screw-in depth of the adjusting screw 28. The cavity of the core 24 is closed at an upper end by a ball-shaped stop plug 30 and a locking screw 31.

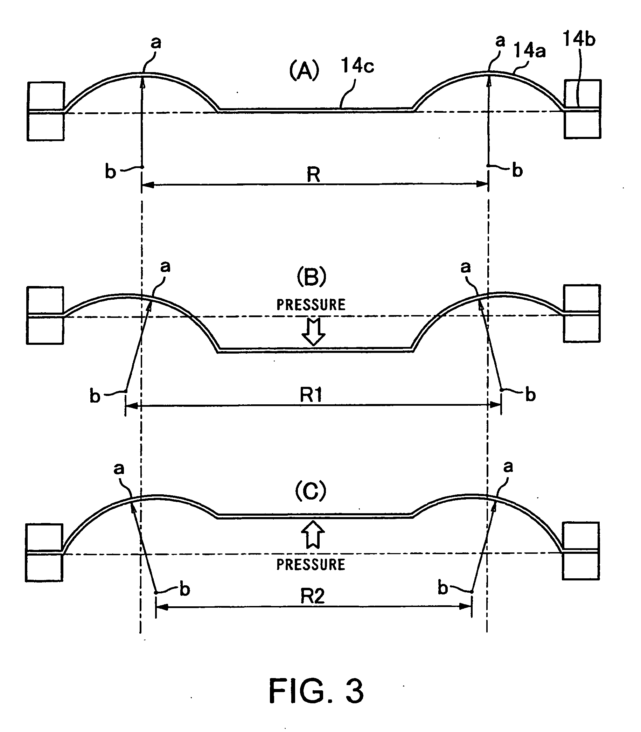

The diaphragm 14 in Fig. 3 comprises a thin circular sheet made of rubber, resin or metal, and has an annular bent portion 14a with an arcuate sectional form to permit displacement thereof in a direction perpendicular to its flat surface. Fig. 3 is a section of the diaphragm 14 taken along a line passing through the diaphragm center. The diaphragm 14 is fixed at its peripheral edge portion 14b. When there is no pressure, a central diaphragm portion 14c is on the level of the peripheral edge portion 14b, as shown in part Figure (A). When the diaphragm 14 receives pressure from above, as viewed in the figure, the central portion 14c is displaced downward, as shown in part (B), and when the diaphragm is applied with pressure from below, the central portion 14c is displaced upward, as shown in part (C).

In the state shown in part (A) (no pressure) the diaphragm has an effective pressure-receiving area equal to the area of a circle with a diameter R connecting diametrically opposite centers b of the curvature of the bent portion 14a, which represent the base points of the radii of curvature at respective center points a of the bent portion 14a. In the state shown in part (B) (pressure from above) the center points a of the bent portion 14a shift inward, and accordingly, the centers b of the curvature shift outward. Then the diaphragm 14 has a larger effective pressure-receiving area equal to the area of a circle with a diameter R1 (> R). In the state shown in part (C) (pressure from below) the center points a of the bent portion 14a shift outward and thus the centers b of curvature shift inward. Then the diaphragm 14 has a smaller effective pressure-receiving area equal to the area of a circle with a diameter R2 (< R). As a consequence, the effective pressure-receiving area of the diaphragm 14 varies depending upon the amount of the axial displacement of the central portion 14c applied with pressure relevant to the peripheral portion 14b, and varies essentially like the pressure receiving area of the valve element 11 varies during the valve lift.

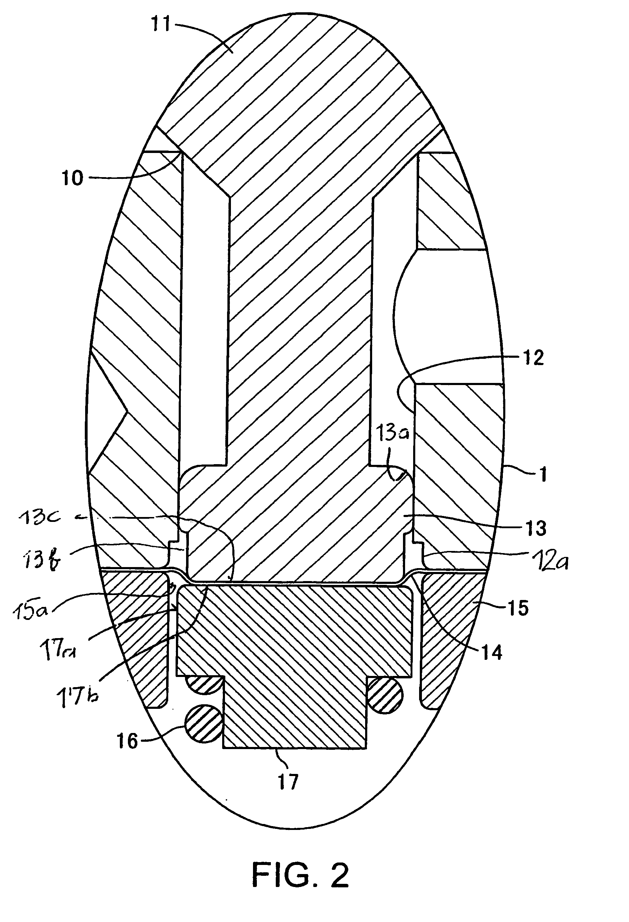

The piston may be designed, as e.g. shown in Fig. 2, such that it has a land portion 13a guided in the cylinder 12. At this land portion 13a the outer diameter is equal to the inner diameter of the valve seat 10. Below the load portion 13a a neck portion 13b is provided having an outer diameter somewhat smaller than the inner diameter of the valve seat 10. The neck portion 13b terminates with a convexly rounded edge at a diaphragm contacting flat end surface 13c having a diameter smaller than the inner diameter of the valve seat 10. The stopper 17 has a cylindrical periphery 17a with an outer diameter essentially equal to the inner diameter of the valve seat 10 and terminates via a convexly rounded edge at a flat diaphragm contacting end surface 17b of larger diameter than the diameter of the piston end surface 13c. Furthermore, the cylinder 12 has a widened portion 12a where the diaphragm 19 is secured. The inner diameter of the widened portion 12a is equal to the inner diameter of a cavity of the annular holder 15, but somewhat larger than the inner diameter of the valve seat 10.

The effective pressure-receiving area of the valve element 11 also varies depending upon the lift amount. When the valve element 11 seats on the valve seat 10, the effective pressure-receiving area corresponds to the diameter of the valve hole. When the valve element 11 moves away from the valve seat 10, the effective pressure-receiving area proportionally decreases. According to the present invention, such variations in the effective pressure-receiving area of the valve element 11 are canceled out by the diaphragm 14 whose effective pressure-receiving area also varies in like manner.

In Fig. 2, the diaphragm 14 is mounted such that when the valve element 11 is seated on the valve seat 10, the diaphragm 14 is in the state shown in part (B) of Fig. 3. The effective pressure-receiving area then is the largest, that is, the central portion 14c is displaced on the side opposite the bent portion 14a with the bent portion 14a directed toward the piston 13. At this time, the effective pressure-receiving area of the diaphragm 14 is of course equal to that of the valve element 11 seated on the valve seat 10. When the valve element 11 starts to move away from the valve seat 10, while its effective pressure-receiving area decreases, the effective pressure-receiving area of the diaphragm 14 also will decrease.

When the electromagnetic coil 25 is de-energized and no refrigerant is introduced into the inlet port 2, the valve element 11 is seated on the valve seat 10 by the spring 29.

As high-pressure refrigerant is introduced from a condenser or a gas cooler into the inlet port 2, the refrigerant is supplied evenly to the first and second chambers 6 and 8. Since the effective pressure-receiving area 9 of the valve element 11 and the diaphragm 14 are equal, the valve element 11 will not open by itself due to the pressure of the introduced refrigerant. The proportional valve safely remains closed.

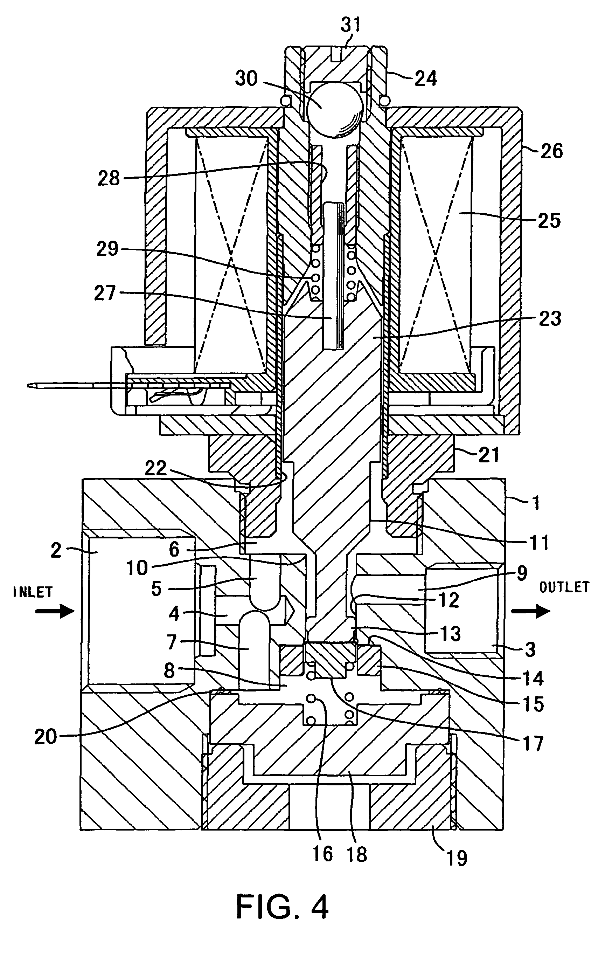

When the electromagnetic coil 25 is energized, the plunger 23 is attracted toward the core 24 for a distance corresponding to the value of the current. The valve element 11 lifts for the same distance. This state is shown in Fig. 4. Refrigerant from the inlet port 2 is supplied to the first and second chambers 6, 8 through the passages 4, 5, 7. The pressures in the first and second chambers 6 and 8 are equal. The effective pressure-receiving areas of the valve element 11 and diaphragm 14 are nearly equal and receive the same pressure in opposite directions. The influence exerted on the valve element 11 by the refrigerant pressure is canceled out. Consequently, the valve element 11 operates depending solely on the value of current supplied and the forces of the springs 16 and 29. Since the forces of the springs 16 and 29 are set beforehand, the lift amount of the valve element 11 is determined only by the value of the current.

Refrigerant supplied to the first chamber 6 passes through the gap between the valve seat 10 and the valve element 11 to the outlet port 3. In the gap the high-temperature, high-pressure refrigerant adiabatically expands and turns into low-temperature, low-pressure refrigerant, then supplied to the evaporator of the refrigerating cycle.

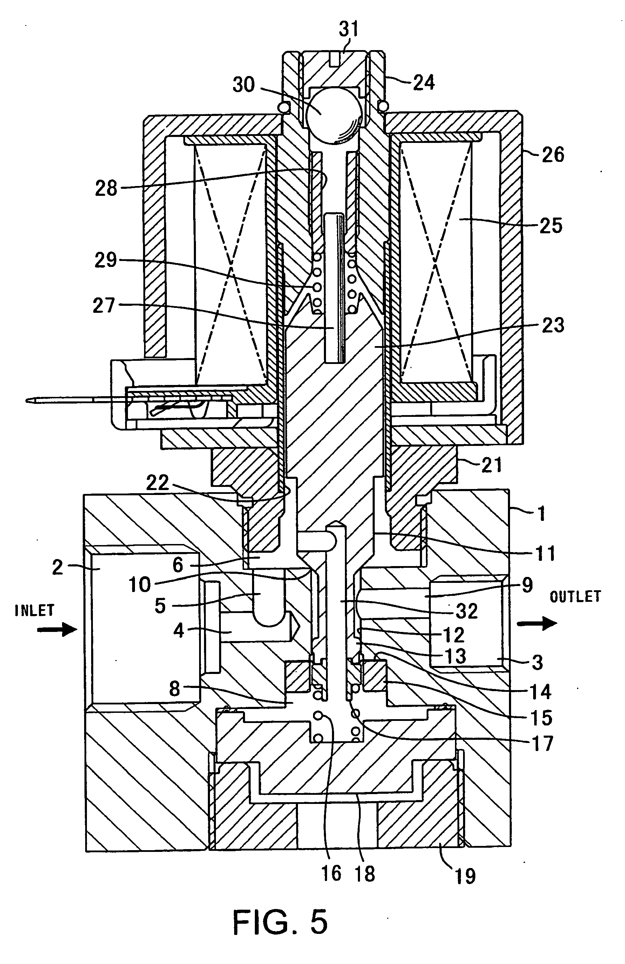

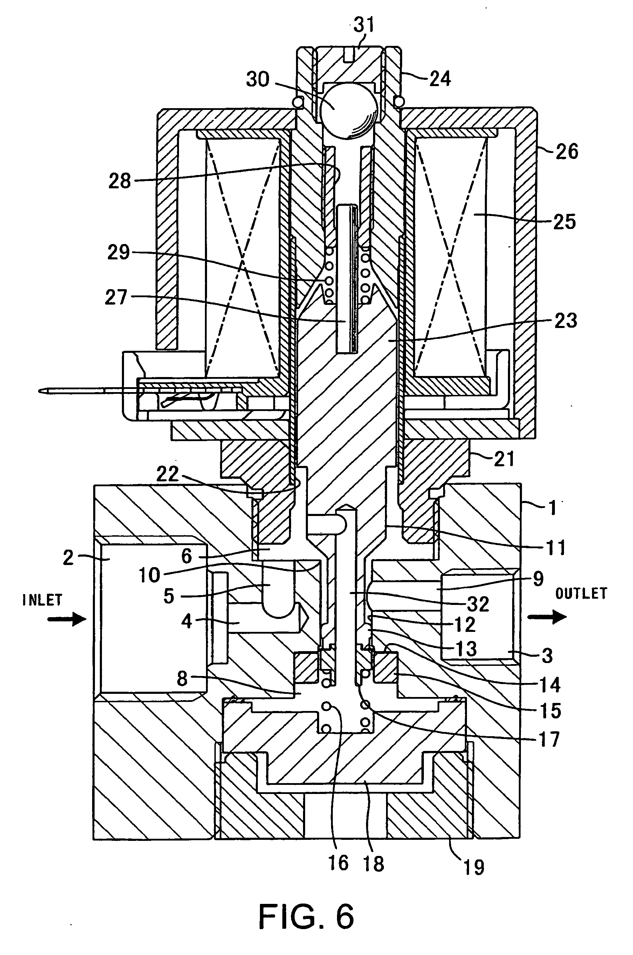

In the proportional valve of Figs 5, 6 the refrigerant is introduced into the second chamber 8 through a passage 32 extending through the valve element 11, piston 13, diaphragm 14 and stopper 17.

Specifically, a lateral communication hole is formed in the valve element 11 in communication with the first chamber 6. The passage 32 extends through the axis of the one-piece body constituted by the valve element 11, the piston 13, and the shaft connecting the valve element 11 and the piston 13. The diaphragm 14 has a doughnut-shape with a hole in the center. The diaphragm outer peripheral portion is clamped between the body 1 and the holder 15. An inner peripheral portion is fixed by the stopper 17 having an axial hole. The stopper 17 is press-fitted into the lower end portion of the piston 13. The diaphragm 14 is mounted in a displaced state such that when the valve element 11 is seated on the valve seat 10 as shown in Fig. 5 (similar to Fig. 2), the effective pressure-receiving area of the diaphragm is a maximum and is equal to the effective pressure-receiving area of the valve element 11.

High-pressure refrigerant introduced into the inlet port 2 from the condenser or the gas cooler enters the first chamber 6 and the second chamber 8 through the passage 32. The pressures in the first and second chambers 6 and 8 are equal. In other respects, the proportional valve of Figs 5, 6 operates in the same manner as that of Figs 1 to 4.

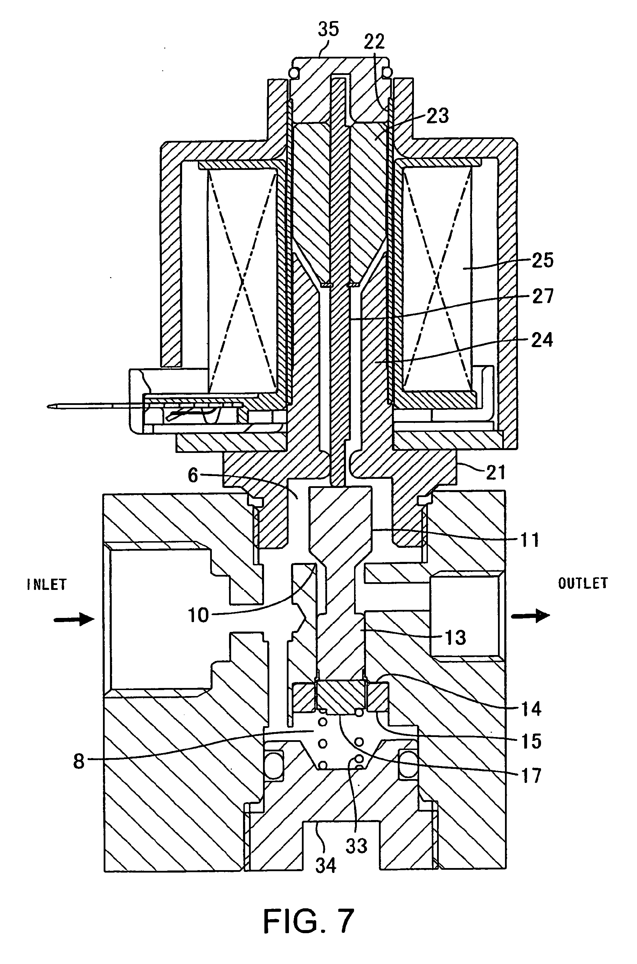

The proportional valves of Figs 1 to 6 are of a normally closed type which is fully closed when the solenoid is de-energized. The proportional valve of Fig. 7 is a normally open type which is fully open when the solenoid is de-energized.

The pressure receiving portion of the piston 13 of Fig. 7 is configured in the same manner as in Figs 1 to 4. The stopper 17 is urged in the valve opening direction by a spring 33. The stopper does not receive urging force from the solenoid when the solenoid is de-energized, so that the proportional valve remains fully open. The force of the spring 33 is adjusted by an adjusting screw 34 screwed into the body 1.

The diaphragm 14 is mounted in a displaced state such that when the valve element 11 is seated on the valve seat 10, the diaphragm 14 has the largest effective pressure-receiving area at least substantially equal to the effective pressure-receiving area of the seated valve element 11. When the proportional valve is fully open as shown in Fig. 7, the diaphragm 14 has another effective pressure-receiving area then corresponding to that of the valve element 11. Consequently, even if refrigerant is introduced while the proportional valve is fully open, the valve element 11 never closes by itself due to the refrigerant pressure.

Compared with the proportional valves of Figs 1 to 6, in Fig. 7 the plunger 23 and core 24 of the solenoid are positioned inversely in the axial direction in Fig. 7. The core 24 is integral with the flange 21 for fixing the solenoid to the body 1. The sleeve 22 is fixed to the core 24. The core 24 has a central cavity and a lower end portion serving as a bearing for the shaft 27 to which the plunger 23 is fixed. An upper end portion of the shaft 27 is supported by a plug 35 closing an upper end of the sleeve 22. In the fully open state as shown in Fig. 7, the plunger 23 is urged against the plug 35 by the spring 33, to limit the maximum lift amount of the valve element 11.

When the electromagnetic coil 25 is energized, the plunger 23 is attracted toward the core 24 for a distance corresponding to the value of the current supplied. The valve element 11 is correspondingly lowered by the shaft 27 against the urging force of the spring 33, whereby the proportional valve of Fig. 7 is brought to a state as shown in Fig. 4 with the valve lift set to a predetermined value. The pressure applied to the valve element 11 is canceled out by the pressure acting upon the diaphragm 14.

## Claims

1. A proportional valve having a body (1) and a valve element (11) whose lift amount relative to a valve seat (10) of the body (1) varies in proportion to a current value,
a piston (13) arranged on one side of the valve seat (10) opposite the valve element (11) and movable together with the valve element (11), the piston (13) receiving at a pressure receiving portion (13c) a pressure equal to a fluid inlet pressure applied to the valve element (11) from an inlet port (2) in valve closing direction, to urge the valve element (11) in valve opening direction;
**characterised in that**
a diaphragm (14) is arranged such in the body (1) and at the pressure receiving portion (13c) of the piston (13), that a pressure receiving area of the diaphragm (14) varies in accordance with the lift amount of the lifted valve element (11), that, when the valve element (11) is in a seated position, the diaphragm (14) is mounted in an axially displaced state such that the pressure receiving area of the diaphragm (19) is a maximum, and that a chamber (8) where the inlet fluid pressure acts upon the diaphragm (14) communicates with the inlet port (2).

2. The proportional valve according to claim 1, **characterised in that** the chamber (8) communicates with the inlet port (2) via a passage (4, 7, 5, 32) formed either in the body (1) or through the diaphragm (14), the piston (13) and the valve element (11).

3. The proportional valve according to claim 1, **characterised in that** the diaphragm (14) has an outer peripheral edge portion (14b) which is secured by an annular holder (15) to the body (1) so a to seal a cylinder (12) slidably receiving the piston (17).

4. The proportional valve according to claim 2, **characterised in that** the diaphragm (14) has an inner peripheral portion secured to the piston (13).

5. The proportional valve according to at least one of the preceding claims, **characterised in that** the diaphragm (14) is a thin circular or doughnut-shaped sheet made of rubber, resin or metal.

6. The proportional valve according to claim 3, **characterised in that** the diaphragm (14) has a circular central flat surface portion (14c) clamped between flat end surfaces (13c, 17b) of the piston (13) and of a spring loaded stopper (17), and
that an annular bent portion (14a) with an arcuate section form is provided between the central flat surface portion (14c) of the diaphragm (19) and the axially fixed peripheral edge portion (14b) for allowing axial displacements of the flat surface portion (14c) relative to the fixed peripheral edge portion (14c), the axial displacement being combined with respective tilting displacements of the annular bent portion (14a).

7. The proportional valve according to claim 6, **characterised in that** the diaphragm contacting end surface (13c) of the piston (13) has a smaller diameter than the inner diameter of the valve seat (10) and, has, preferably, a convexly rounded edge.

8. The proportional valve according to claim 6, **characterised in that** the diaphragm contacting end surface (17b) of the stopper (17) has a diameter essentially equal to the inner diameter of the valve seat (10), and has, preferably, a convexly rounded edge.

9. The proportional valve according to claim 3, **characterised in that** the inner diameters of the cylinder (12) receiving the piston (17) and of the annular holder (15) securing the diaphragm (14) in the body (1), particularly in the region where the diaphragm (14) is secured in the body (1) and is allowed to be displaced axially, are larger than the inner diameter of the valve seat (10).

## Patentansprüche

1. Proportionalventil, mit einem Körper (1) und einem Ventilelement (11), dessen Hubausmaß relativ zu einem Ventilsitz (10) des Körpers (1) proportional zu einem Stromwert variiert,
einem an einer Seite des Ventilsitzes (10) abgewandt von dem Ventilelement (11) angeordneten Kolben (13), der zusammen mit dem Ventilelement (11) bewegbar ist und an einem Druckaufnahmebereich (13c) einen Druck gleich einem Fluideinlassdruck aufnimmt um das Ventilelement (11) in Ventilöffnungsrichtung zu beaufschlagen, der von einem Einlassanschluss (2) in Ventilschließrichtung auch auf das Ventilelement (11) aufgebracht wird,
**dadurch gekennzeichnet, dass**
in dem Körper (1) und an dem Druckaufnahmebereich (13c) des Kolbens (13) eine Membrane (14) so angeordnet ist, dass eine Druckaufnahmefläche der Membrane (14) entsprechend dem Hubausmaß des abgehobenen Ventilelementes (11) variiert, dass dann, wenn das Ventilelement (11) in einer aufgesetzten Position ist, die Membrane (14) in einem axial verlagerten Zustand so montiert ist, dass die Druckaufnahmefläche der Membrane (14) ein Maximum ist, und dass eine Kammer (8), in welcher der Einlassfluiddruck auf die Membrane (14) einwirkt, mit dem Einlassanschluss (2) kommuniziert.

2. Proportionalventil gemäß Anspruch 1, **dadurch gekennzeichnet, dass** die Kammer (8) mit dem Einlassanschluss (2) über eine Passage (4, 7, 5, 32) kommuniziert, die entweder in dem Körper (1) oder durch die Membrane (14), den Kolben (13) und das Ventilelement (11) geformt ist.

3. Proportionalventil gemäß Anspruch 1, **dadurch gekennzeichnet, dass** die Membrane (14) einen äußeren Randbereich (14b) aufweist, der durch einen ringförmigen Halter (15) an dem Körper (1) so festgelegt ist, dass ein Zylinder (12) versiegelt wird, der den Kolben (13) verschiebbar aufnimmt.

4. Proportionalventil gemäß Anspruch 2, **dadurch gekennzeichnet, dass** die Membrane (14) einen inneren peripheren Bereich aufweist, der an dem Kolben (13) festgelegt ist.

5. Proportionalventil gemäß wenigstens einem der vorhergehenden Ansprüche, **dadurch gekennzeichnet, dass** die Membrane (14) ein dünnes kreisförmiges oder Doughnut-förmiges Plättchen aus einem Material wie Kunstharz, Gummi oder Metall ist.

6. Proportionalventil gemäß Anspruch 3, **dadurch gekennzeichnet, dass** die Membrane (14) einen kreisförmigen zentralen ebenen Flächenbereich (14c) aufweist, der zwischen ebenen Endflächen (13c, 17b) des Kolbens (13) und eines federbeaufschlagten Stoppers (17) eingeklemmt ist, und
dass zwischen dem zentralen ebenen Flächenbereich (14c) und dem axial fixierten Umfangsrandbereich (14b) der Membrane (14) ein ringförmiger gebogener Bereich (14a) mit einer bogenförmigen Querschnittsform vorgesehen ist, um axiale Verlagerungen des ebenen Flächenbereichs (14c) relativ zu dem fixierten Randbereich (14c) zuzulassen, wobei die axialen Verlagerungen kombiniert sind mit jeweiligen Kippverlagerungen des ringförmigen gebogenen Bereich (14a).

7. Proportionalventil gemäß Anspruch 6, **dadurch gekennzeichnet, dass** die die Membrane kontaktierende Endfläche (13c) des Kolbens (13) einen kleineren Durchmesser hat als den Innendurchmesser des Ventilsitzes (10), und, vorzugsweise, einen konvex gerundeten Rand besitzt.

8. Proportionalventil gemäß Anspruch 6, **dadurch gekennzeichnet, dass** die die Membrane kontaktierende Endfläche (17b) des Stoppers (17) einen Durchmesser essenziell gleich dem Innendurchmesser des Ventilsitzes (10) hat, und, vorzugsweise, einen konvex gerundeten Rand besitzt.

9. Proportionalventil gemäß Anspruch 3, **dadurch gekennzeichnet, dass** die Innendurchmesser des den Kolben (17) aufnehmenden Zylinders (12) und des ringförmigen Halters (15) zum Festlegen der Membrane (14) in dem Körper (1), speziell in dem Bereich, in welchem die Membrane (14) in dem Körper festgelegt ist und axial verlagert werden kann, größer sind als der Innendurchmesser des Ventilsitzes (10).

## Revendications

1. Dispositif pour moteur thermique, comprenant un carter de moteur (700), monté au fond d'un bâti moteur (6), comportant un carter d'huile (700a) dans une partie inférieure du carter de moteur (700),
le carter de moteur (700) comportant en outre une plaque déflectrice (702) et un épurateur (701) raccordés à une extrémité inférieure d'une conduite d'huile (704) et
la conduite d'huile (704), l'épurateur et la plaque déflectrice (702) étant fixés d'un seul bloc au carter de moteur (700) pour former une unité, avant le montage de ladite unité sur le bâti moteur (6),
**caractérisé en ce que**
l'épurateur (701) est fixé au fond du carter d'huile (700a) dans la partie inférieure du carter de moteur (700) à l'aide d'une première fixation (703) et, à une extrémité supérieure de la conduite d'huile (704), un élément de raccordement (740), comportant un élément d'étanchéité (742), est inséré dans un évidement (750) formé par le bâti moteur (6) et raccordé à l'entrée d'une pompe à huile (70) selon le montage de ladite unité sur le bâti moteur (6).

2. Dispositif pour moteur selon la revendication 1, **caractérisé en ce que** la plaque déflectrice (702) forme un évidement pour montage (702a) afin d'insérer la conduite d'huile 704 dans ledit évidement pour montage (702a).

3. Dispositif pour moteur selon la revendication 1 ou 2, **caractérisé en ce qu'**une bague de guidage (743) prévue à l'extrémité supérieure de la conduite d'huile (704) facilite l'insertion de l'extrémité supérieure de la conduite d'huile (704) dans l'évidement (750) formé par le bâti moteur (6).

4. Dispositif pour moteur selon au moins l'une des précédentes revendications 1 à 3, **caractérisé en ce qu'**une surface de fond du carter d'huile (700a) est plate, et **en ce que** la plaque déflectrice (702) est alignée en parallèle avec la surface de fond du carter d'huile (700a).

5. Dispositif pour moteur selon au moins l'une des précédentes revendications 1 à 4, **caractérisé en ce que** la conduite d'huile (704) est raccordée par une seconde fixation (705) à une paroi interne du carter de moteur (700), et **en ce qu'**une partie avant (702b), une partie arrière (702c), et une partie latérale droite (702d) de la plaque déflectrice (702) sont raccordées à la paroi interne du carter de moteur (700), et **en ce qu'**une partie latérale gauche (702e) de la plaque déflectrice (702) est raccordée à une partie supérieure (700b) de la surface de fond du carter de moteur (700).

6. Dispositif pour moteur selon la revendication 5, **caractérisé en ce que** des ouvertures (721) sont prévues entre chacune des parties avant, arrière et latérale droite (702b, 702c, 702d) de la plaque déflectrice (702) et de la paroi interne du carter de moteur (702e) de la plaque déflectrice (702), et la partie supérieure (700b) de la surface de fond du carter de moteur (700).

7. Dispositif pour moteur selon au moins l'une des précédentes revendications 1 à 6, **caractérisé en ce que** les accessoires du moteur sont formés d'un seul bloc avec un capot moteur (58).

8. Dispositif pour moteur selon la revendication 7, **caractérisé en ce que** la pompe à huile (70) et/ou une pompe à eau (80) sont formées d'un seul bloc avec le capot moteur (58).

9. Dispositif pour moteur selon la revendication 7 ou 8, **caractérisé en ce que** les accessoires du moteur et deux volants de vilebrequin (8, 9) sont disposés d'un seul bloc et de façon à tourner sur la gauche et la droite d'un arbre à vilebrequin (7), pour former un système d'entraînement direct à arbre central.
